(19) Europäisches Patentamt
European Patent Office
Office européen des brevets

(11) EP 4 215 563 A1

(12) EUROPEAN PATENT APPLICATION
published in accordance with Art. 153(4) EPC

(43) Date of publication:
**26.07.2023 Bulletin 2023/30**

(21) Application number: **21869592.2**

(22) Date of filing: **01.09.2021**

(51) International Patent Classification (IPC):
***C08G 63/668*** *(2006.01)*

(52) Cooperative Patent Classification (CPC):
**C08G 63/668**

(86) International application number:
**PCT/KR2021/011741**

(87) International publication number:
**WO 2022/059970 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2020 KR 20200120035**
**25.08.2021 KR 20210112597**

(71) Applicant: **Kolon Industries, Inc.**
**Seoul 07793 (KR)**

(72) Inventors:
- **SUH, Young Sung**
  **Seoul 07793 (KR)**
- **PARK, No Woo**
  **Seoul 07793 (KR)**
- **KIM, Ho Sub**
  **Seoul 07793 (KR)**
- **HONG, Choong Hee**
  **Seoul 07793 (KR)**
- **NOH, Kyung Gyu**
  **Seoul 07793 (KR)**
- **PARK, Ki Hyun**
  **Seoul 07793 (KR)**

(74) Representative: **Ter Meer Steinmeister & Partner**
**Patentanwälte mbB**
**Nymphenburger Straße 4**
**80335 München (DE)**

# (54) POLYESTER POLYMER

(57) The present invention provides a polyester polymer having improved heat discoloration and at the same time, having a high molecular weight.

EP 4 215 563 A1

## Description

### [Technical Field]

The present invention relates to a polyester polymer, and more particularly, has an effect of providing a polyester polymer with improved molecular weight and heat discoloration properties using a dicarboxylic acid aromatic heterocyclic compound or a derivative thereof as a raw material.

### [Background Art]

Polyester is an eco-friendly polymer with biodegradability. A dicarboxylic acid aromatic heterocyclic compound or a derivative thereof useful as a monomer of polyester may be a derivative usually prepared by oxidizing 5-hydroxymethylfurfural, and a representative example thereof may be 2,5-furan dicarboxylic acid. For reference, since 5-hydroxymethylfurfural (HMF) is obtained from sugar, it is a derivative of a raw material widely available in nature.

A technique for producing polyester by esterification of the dicarboxylic acid aromatic heterocyclic compound or the derivative thereof with diols and polycondensation reaction of oligomers obtained thereby has been developed.

The esterification reaction is a coupling reaction between the carboxyl group of a dibasic acid and the OH group of glycol, which takes place under an inert gas atmosphere under normal pressure or pressurized conditions, and water is produced as a by-product (Reaction Scheme 1).

(Reaction Scheme 1)

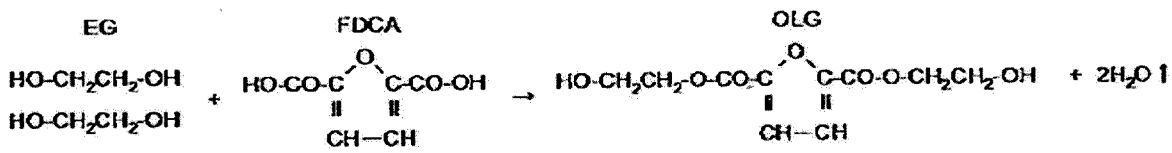


The reaction is promoted by removing the produced water as effluent, and when no effluent is generated, it may be inferred that the esterification reaction is complete. The reaction is also accelerated by adding a polymerization catalyst as needed. At this time, the temperature may be 150 to 240 °C, the pressure may be carried out for 1 hr to 6 hr under a pressure of 1 bar to 6 bar.

Also, in the polycondensation polymerization reaction, among the oligomers obtained by the above-described esterification reaction under reduced pressure, the terminal glycol of one oligomer is removed and the terminal glycol of the other oligomer is bonded. At this time, the temperature may be 230 to 285 °C and may be performed for 1 hr to 24 hr under vacuum. As a by-product, glycol is produced (Reaction Scheme 2), and by distilling and removing this, the reaction is promoted and a degree of polymerization is increased.

(Reaction Scheme 2)

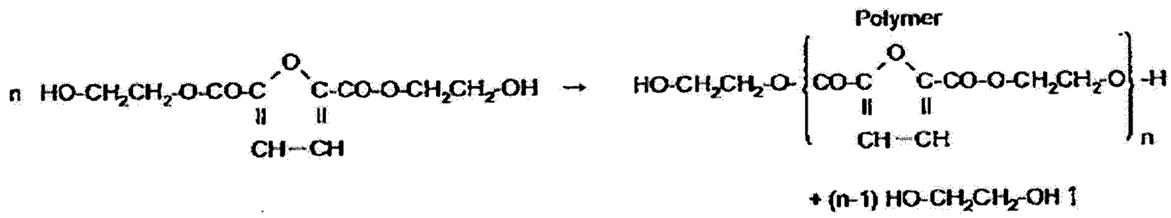


In other words, in general-purpose plastics such as the polyester, a technology of introducing the biodegradability and also, introducing a long chain into the polymer chain as at the same time is important. The introduction of the long chain imparts shear fluidization tendency, realizing excellent processibility in application such as a blow film, a cast film, injection molding, blow molding, thermal molding, and the like. On the other hand, in the above-described condensation polymerization process, coloration may occur due to formation of a double bond between carbon atoms (Reaction Scheme 3).

(Reaction Scheme 3)

$$HO-\{(CH_2)_2OCO(C_6H_4)OC\}_x-O(CH_2)_2OH$$
$$\rightarrow HO-\{(CH_2)_2OCO(C_6H_4)OC\}_y-OH$$
$$+\ HO-\{(CH_2)_2OCO(C_6H_4)OC\}_{x-y}-OCH=CH_2$$

Since this coloration is in general known to be in an inversely proportional trade-off relationship with a molecular weight of the polyester obtained through the condensation polymerization process, there is a limit to obtaining a polymer with a high molecular weight without thermal discoloration.

[Prior Art Documents]

[Patent Document]

(Patent Document 1) Chinese Patent No. 103483571

**[Disclosure]**

**[Description of the Drawings]**

[Technical Problem]

It is an object of the present invention to provide polyester polymers with improved heat discoloration and at the same time high molecular weight.

[Technical Solution]

One aspect of the present invention provides a polyester polymer including a repeating unit represented by Chemical Formula 1, an intrinsic viscosity of greater than or equal to 0.45 dL/g, and a b value of less than or equal to 13.5 in a Lab color difference system.

[Chemical Formula 1]

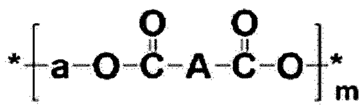

(in Chemical Formula 1, A is a furan-based unit, and a is a substituted or unsubstituted alkylene having 2 to 20 carbon atoms or a substituted or unsubstituted cycloalkylene having 5 to 20 carbon atoms, and
m is an integer of greater than or equal to 1.)

In addition, the value of Equation 1 may be greater than or equal to 0.5.

[Equation 1]

$$\frac{\Delta IV}{b\ Value} \times 100$$

(in Equation 1, ΔIV is the difference between intrinsic viscosity values measured at normal pressure and 25 °C and at normal pressure and 35 °C, respectively, and the b value is a b value on the Lab color difference system.)
A repeating unit represented by Chemical Formula 2 may be further included.

[Chemical Formula 2]

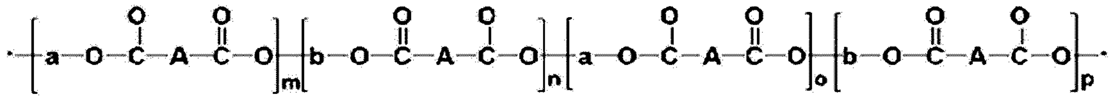

(In Chemical Formula 2, A is a furan-based unit, a is a substituted or unsubstituted alkylene having 2 to 20 carbon atoms, or a substituted or unsubstituted cycloalkylene having 5 to 20 carbon atoms, and b is a substituted or unsubstituted alkylene having 2 to 20 carbon atoms, a substituted or unsubstituted heteroalkylene having 3 to 20 carbon atoms, a substituted or unsubstituted cycloalkylene having 5 to 20 carbon atoms, or a substituted or unsubstituted arylene having 6 to 20 carbon atoms,
m, n, o, and p are integers greater than or equal to 0, and $m+n+o+p \geq 2$.)

Also, the n value may be greater than the m value.

In addition, A may each independently include a structure represented by Chemical Formula 3.

[Chemical Formula 3]

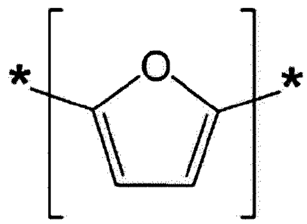

The a of the copolymers of Chemical Formula 1 and Chemical Formula 2 may be selected from units derived from compounds represented by Chemical Formula 6a and Chemical Formula 6c.

[Chemical Formula 6a]

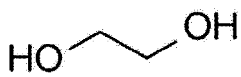

[Chemical Formula 6b]

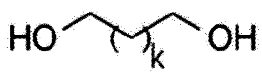

k = 2-20

[Chemical Formula 6c]

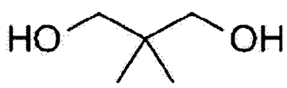

The b of the copolymer of Chemical Formula 2 may be selected from units derived from compounds represented by Chemical Formula 6b and Chemical Formula 6u.

[Chemical Formula 6b]

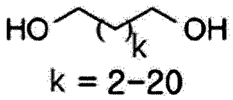

k = 2-20

[Chemical Formula 6c]

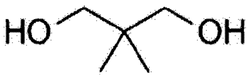

[Chemical Formula 6d]

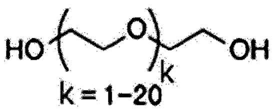

k = 1-20

[Chemical Formula 6e]

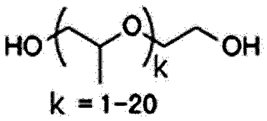

k = 1-20

[Chemical Formula 6f]

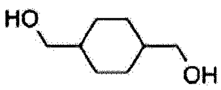

[Chemical Formula 6g]

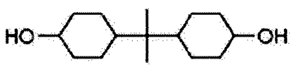

[Chemical Formula 6h]

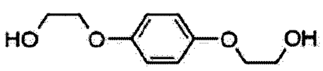

[Chemical Formula 6i]

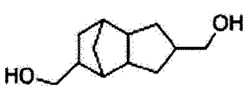

[Chemical Formula 6j]

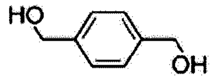

[Chemical Formula 6k]

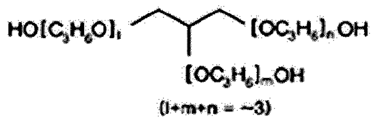

[Chemical Formula 6l]

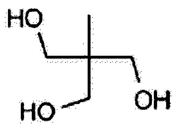

[Chemical Formula 6m]

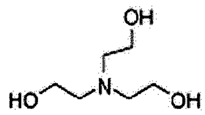

[Chemical Formula 6n]

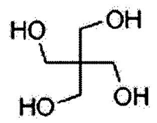

[Chemical Formula 6o]

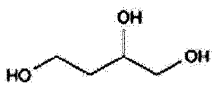

[Chemical Formula 6p]

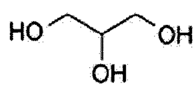

[Chemical Formula 6q]

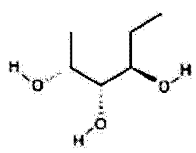

[Chemical Formula 6r]

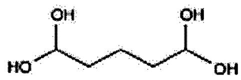

[Chemical Formula 6s]

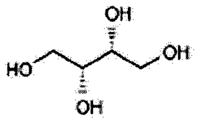

[Chemical Formula 6t]

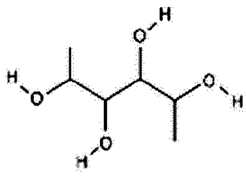

[Chemical Formula 6u]

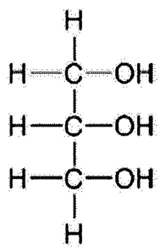

In addition, the value of Equation 2 may satisfy a value of greater than or equal to 0.5.

[Equation 2]

$$\frac{\Delta IV}{b\ value} \times Tg$$

(in Equation 2, ΔIV is a difference between intrinsic viscosity values measured at 35 °C and 25 °C, respectively, the b value is a b value in the Lab color difference system, and Tg is a glass transition temperature.)

**[Advantageous Effects]**

The present invention provides a polyester polymer having a long chain. By introducing a long chain, a polymer having a high molecular weight may be more easily provided and a polymer with improved heat discoloration may be obtained. Specifically, the present invention minimizes the time the polymer is exposed to high temperatures by shortening a synthesis time required until the polymer has a molecular weight of a certain level or higher. Through this, the present invention can provide a polyester polymer with minimized heat discoloration.

**[Mode for Invention]**

Throughout the specification, when a part "includes" a certain component, it means that it may further include

other components without excluding other components unless otherwise specified.

A polyester polymer according to an embodiment of the present invention includes a repeating unit represented by Chemical Formula 1.

[Chemical Formula 1]

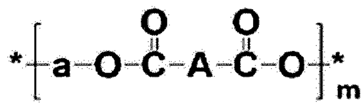

Herein, a biodegradable polyester polymer may be prepared using a furan-based unit as A.

Herein, a is a unit that provides alkylene to the polyester polymer, and is a substituted or unsubstituted alkylene having 2 to 20 carbon atoms or a substituted or unsubstituted cycloalkylene having 5 to 20 carbon atoms, and m is an integer of greater than or equal to 1.

As used herein, the term alkylene refers to a divalent radical derived from alkyl, wherein alkyl includes linear, branched, or cyclic hydrocarbon radicals. In this case, an alkyl having 2 to 10 carbon atoms may be used.

Specific examples of the alkylene include ethylene glycol, propanediol, butanediol, hexenediol, octanediol, and the like, but are not limited thereto.

Substitution as described herein means that one or more hydrogen atoms in a hydrocarbon are replaced independently of each other by the same or different substituents. It may include various known substituents, and specific descriptions are omitted.

The a is used in a molar ratio of 1.2 to 3.6 or 1.2 to 2.0 based on 1 mole of the furan-based unit of A in the polymer of Chemical Formula 1, thereby providing a polyester polymer having a high reaction rate and a high molecular weight. For example, the polyester polymer may be a polymer having an intrinsic viscosity of greater than or equal to 0.45 dL/g and a high molecular weight, and the b value of less than or equal to 13.5 in a Lab color difference system, thereby improving heat discoloration.

In addition, m is an integer of greater than or equal to 1, and may represent the number of repeating units, but is not limited thereto.

The polyester polymer may have a value of greater than or equal to 0.5 in Equation 1.

[Equation 1]

$$\frac{\Delta IV}{b\ Value} \times 100$$

wherein $\Delta$IV is the difference between intrinsic viscosity values measured at normal pressure and 25 °C and at normal pressure and 35 °C and the b value is a b value on the Lab color difference system.

The polyester polymer according to an embodiment of the present invention may include a repeating unit represented by Chemical Formula 2.

[Chemical Formula 2]

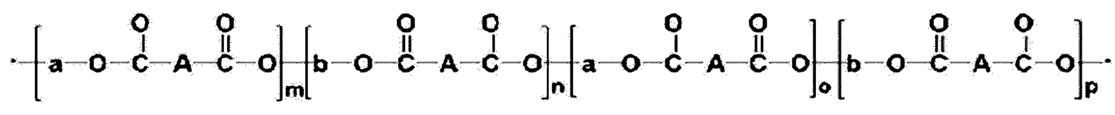

Herein, b is a unit that provides alkylene to the polyester polymer, and may be a substituted or unsubstituted alkylene having 2 to 20 carbon atoms, a substituted or unsubstituted heteroalkylene having 3 to 20 carbon atoms, a substituted or unsubstituted cycloalkylene having 5 to 20 carbon atoms, or a substituted or unsubstituted arylene having 6 to 20 carbon atoms.

As used herein, the term heteroalkylene refers to a divalent radical derived from heteroalkyl. Herein, the heteroalkyl by itself or in combination with other terms, unless otherwise specified, refers to a stable linear, branched, or cyclic hydrocarbon radical or a combination thereof consisting of one or more carbon atoms and one or more heteroatoms selected from O, N, P, Si, and S, wherein the nitrogen, phosphorus and sulfur atoms may optionally be oxidized and the

nitrogen heteroatoms may optionally be quaternized.

In addition, the term arylene as used in the present invention refers to a divalent radical derived from an aromatic hydrocarbon, and the term aryl refers to a polyunsaturated, aromatic, hydrocarbon substituent that may be a single ring or multiple rings (1 to 3 rings) fused or covalently bonded together, unless otherwise indicated.

However, it is desirable to use a different type from the aforementioned a as b.

The m, n, o, and p are integers greater than or equal to 0, and $m+n+o+p \geq 2$. Herein, m, n, o, and p may represent the number of repeating units, but is not limited thereto.

Herein, repeated descriptions for A and a from the above description are omitted and further looking, the A may include a structure represented by Chemical Formula 3.

[Chemical Formula 3]

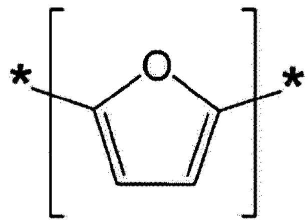

Specifically, A of the polymer of Chemical Formula 1 may be derived from a compound having a substituted structure with an alkoxy group having 1 to 20 carbon atoms, such as a compound having a structure represented by Chemical Formula 4 or 5.

[Chemical Formula 4]

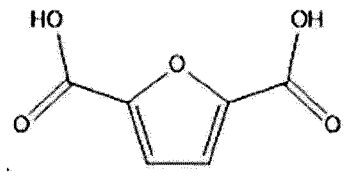

[Chemical Formula 5]

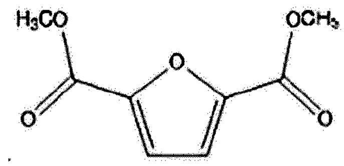

In this case, a usable in the embodiment of the polymer of Chemical Formula 1 or 2 may be selected from units derived from compounds represented by Chemical Formula 6a and Chemical Formula 6c.

[Chemical Formula 6a]

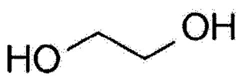

[Chemical Formula 6b]

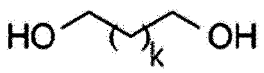

k = 2-20

[Chemical Formula 6c]

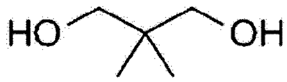

In addition, b usable in the polymer of Chemical Formula 2 may be selected from units derived from compounds represented by Chemical Formula 6b and Chemical Formula 6u, and in this case, Mn in Chemical Formula 6k is desirably within 260.

[Chemical Formula 6b]

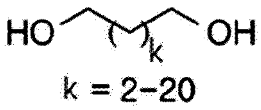

k = 2-20

[Chemical Formula 6c]

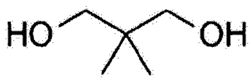

[Chemical Formula 6d]

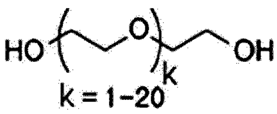

k = 1-20

[Chemical Formula 6e]

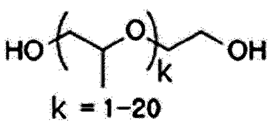

k = 1-20

[Chemical Formula 6f]

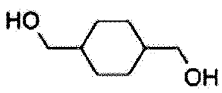

[Chemical Formula 6g]

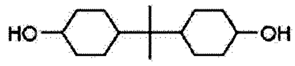

[Chemical Formula 6h]

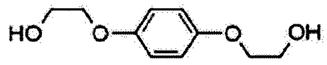

[Chemical Formula 6i]

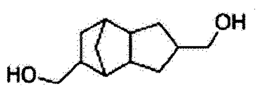

[Chemical Formula 6j]

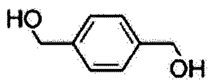

[Chemical Formula 6k]

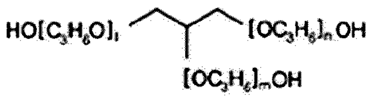

(l+m+n = ~3)

[Chemical Formula 6l]

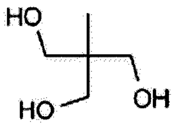

[Chemical Formula 6m]

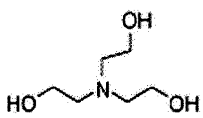

[Chemical Formula 6n]

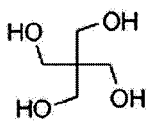

[Chemical Formula 6o]

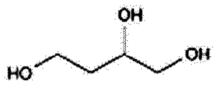

[Chemical Formula 6p]

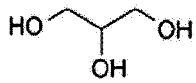

[Chemical Formula 6q]

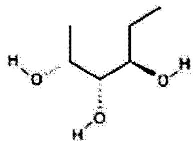

[Chemical Formula 6r]

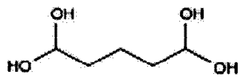

[Chemical Formula 6s]

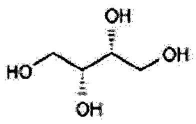

[Chemical Formula 6t]

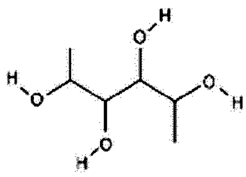

[Chemical Formula 6u]

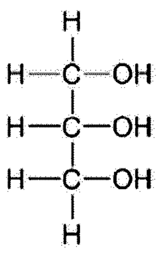

For reference, when ethylene glycol is selected as the above-described a and another type other than ethylene

glycol is selected as b, the n value in Chemical Formula 2 is difficult to be greater than the m value because of the high reactivity (compatibility) of ethylene glycol. In the present invention, by using process conditions in which the n value is greater than the m value and consequently introducing a long chain having an n value greater than the m value, a polymer having a high molecular weight may be more easily provided and a polymer having improved heat discoloration may be obtained

Accordingly, the value of n may be greater than the value of m, and similarly, the value of p may be greater than the value of o.

In the polyester polymer according to another embodiment of the present invention, the value of Equation 2 satisfies a value of greater than or equal to 0.5.

[Equation 2]

$$\frac{\Delta IV}{b\ value} \times Tg$$

Herein, ΔIV is the difference between intrinsic viscosity values measured at normal pressure and 25 °C and at normal pressure and 35 °C, respectively, the b value is a b value on the Lab color difference system, and Tg is a glass transition temperature.

The preparing method of the polyester polymer according to the present invention may use various known preparing methods including Reaction Schemes 1 and 2 disclosed in the background art of the present invention. The reaction may be carried out in the presence of a catalyst if necessary.

The catalyst may be in a solid or liquid state, and for example, has the chemical formula $C_aH_bO_cP_dTi_e$ (a is an integer from 30 to 120, b is an integer from 50 to 250, c is an integer from 5 to 30, d is an integer from 0 to 4, and e is 1 to an integer of 2) may be used, but is not limited thereto.

In this case, a may be an integer of 44 to 100.

Also, b may be an integer of 98 to 194.

Also, c may be an integer of 8 to 18.

Also, d may be an integer of 1 to 4.

Also, e may be an integer of 1 to 2.

Also, $c/e \geq 4$ may be satisfied.

Also, $4 \leq c/e \leq 18$ may be satisfied.

For example, a catalyst having a -Ti-O-P- bond, a catalyst having a -TiP-O- bond, and a catalyst having a -Ti-O- bond while satisfying the aforementioned a, b, c, d, e, and c/e conditions may be used.

As a specific example, it is desirable to use the catalyst having a catalyst having the -Ti-O-P- bond and the catalyst having the -Ti-P-O- bond while satisfying the aforementioned conditions a, b, c, d, e, and c/e because a trade-off relationship between heat discoloration and molecular weight can be solved.

The catalyst having a -Ti-O-P- bond, the catalyst having a -Ti-P-O- bond, and a catalyst having a -Ti-O- bond while satisfying the aforementioned a, b, c, d, e, and c/e conditions may include an alkoxide-based or chelate-based, but are not limited thereto.

The catalyst may have a structure represented by Chemical Formulas 5 to 7, but is not limited thereto.

[Chemical Formula 5]

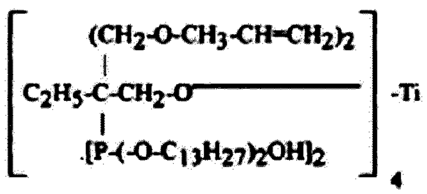

[Chemical Formula 6]

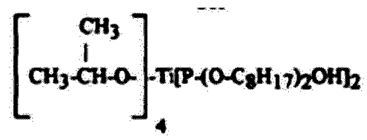

[Chemical Formula 7] $(C_8H_{17}\text{-}O\text{-})_4\text{-}Ti[P\text{-}(O\text{-}C_{13}H_{27})_2OH]_2$

The catalyst may have specific gravity of 0.94 to 0.99, when measured at 25 °C, and within the range, provide specific gravity optimized in the polymerization reaction, resolving the trade-off relationship between heat discoloration and molecular weight.

An amount of the catalyst is not particularly limited but may be, for example, less than or equal to 500 ppm, 10 ppm to 500 ppm, or 10 ppm to 300 ppm.

According to one embodiment of the present invention, the catalyst should be desirably included between Reaction Scheme 1 and Reaction Scheme 2 in consideration of reaction efficiency.

When the polyester polymer according to an embodiment of the present invention uses a compound having a structure represented by Chemical Formula 1 as a raw material of A of a copolymer represented by Chemical Formula 2, ethylene glycol as a raw material of a, and hexanediol as a raw material of b, which satisfy intrinsic viscosity (IV) of less than or equal to 0.75, or 0.66 to 0.74, L measured with a colorimeter of less than or equal to 56 or 48.8 to 55.1, a of less than or equal to 0 or -0.7 to -0.1, and b of less than or equal to 13.5 or 11.2 to 13.4, the trade-off relationship between molecular weight and color purity (b value) is resolved.

Hereinafter, it will be described with reference to examples of the present invention, but the following examples were performed under limited reaction times and conditions to illustrate the present invention, and the scope of the present invention is not limited only to these.

<Examples>

## 1. Precursor Synthesis

[Synthesis Example 1]

Compound of Chemical Formula 4 (hereinafter also referred to as F1): product of Sigma Aldrich Co., Ltd.

[Chemical Formula 4]

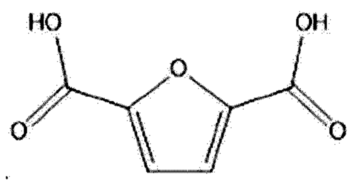

Compound of Chemical Formula 5 (hereinafter, also referred to as F2): product of Alfa Chemical Co., Ltd.

[Chemical Formula 5]

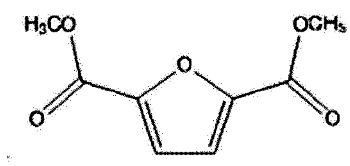

EG: Ethylene glycol (Sigma Aldrich Co., Ltd.)
HDO: 1,6-Hexanediol (Sigma Aldrich Co., Ltd.)

Tyzor TBT: Titanium (IV) butoxide (Sigma Aldrich Co., Ltd.)

The aforementioned materials in a ratio shown in Table 1 were mixed, and a Ti-based alkoxide-based catalyst (10 ppm based on a content of Ti metal) and then, reacted at greater than or equal to 150 °C and less than or equal to 230 °C under a nitrogen atmosphere to measure an effluent produced therefrom over time, which was used with a theoretical effluent to calculate a conversion rate and a reaction rate. When there was no more effluent therefrom, the reaction was completed and drained, obtaining a B unit specimen.

Specifically, the polyester polymer of Table 1 includes a repeating unit represented by Chemical Formula 1.

[Chemical Formula 1]

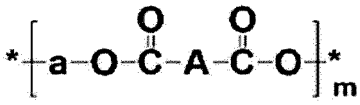

(Table 1)

| | B | | | |
|---|---|---|---|---|
| | Preparation Example 1 | Preparation Example 2 | Preparation Example 3 | Preparation Example 4 |
| Raw material of A in Chemical Formula 1 (equivalent) | F1 1.0 | F1 1.0 | F2 1.0 | F2 1.0 |
| Raw material of a in Chemical Formula 1 (equivalent) | EG 1.2 | EG 1.5 | EG 1.2 | EG 1.5 |
| Mn (g/mol) | 2801 | 2454 | 2643 | 2573 |

[Synthesis Example 2]

The materials used in Synthesis Example 1 were mixed in a ratio shown in Table 2, and a Ti-based alkoxide-based catalyst (10 ppm based on a Ti metal content) was added thereto and then, reacted at greater than or equal to 150 °C and less than or equal to 230 °C under a nitrogen atmosphere to measure an effluent produced therefrom over time, which was used with a theoretical effluent to calculate a conversion rate and a reaction rate. When there was no more effluent therefrom, the reaction was completed and drained, obtaining a C unit specimen.

Specifically, the polyester polymer of Table 1 includes a repeating unit represented by Chemical Formula 2.

[Chemical Formula 2]

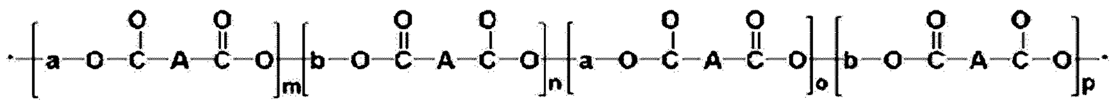

(Table 2)

| | C | | | |
|---|---|---|---|---|
| | Preparation Example 5 | Preparation Example 6 | Preparation Example 7 | Preparation Example 8 |
| Raw material of A in Chemical Formula 1 (equivalent) | F1 1.0 | F1 1.0 | F2 1.0 | F2 1.0 |

(continued)

| | | C | | | | | | | |
|---|---|---|---|---|---|---|---|---|---|
| | | Preparation Example 5 | | Preparation Example 6 | | Preparation Example 7 | | Preparation Example 8 | |
| Raw material of a in Chemical Formula 1 (equivalent) | Raw material of b in Chemical Formula 1 (equivalent) | EG 1.2 | HDO 0.3 | EG 1.5 | HDO 0.3 | EG 1.2 | HDO 0.3 | EG 1.5 | HDO 0.3 |
| Mn (g/mol) | | 2801 | | 2454 | | 2643 | | 2573 | |

2. Preparation of Polyester Polymer

Polyester polymers of Examples 1 to 8 were prepared by using 30% of each precursor according to Synthesis Examples 1 to 2 based on a total amount of the corresponding polyester polymer, but polyester polymers of Comparative Examples 1 to 4 were prepared respectively to have contents shown in the following table without adding the precursors.

The synthesized precursors of Synthesis Examples 1 to 2 (B unit specimen or C unit specimen) were used with the polymer of Formula 1 using a compound of Chemical Formula 4 or 5 as a raw material of A, EG as a raw material of a, and HDO as a raw material of b and then, mixed in a mole ratio of 1:1.2 to 3.6 and esterified ($N_2$, 150 to 230 °C), and a Ti-based alkoxide-based catalyst (10 ppm based on a Ti metal content) was added thereto and then, condensation-polymerized (vacuum, 220 to 285 °C), preparing a polyester polymer specimen. The components used in Examples 1 to 8 and Comparative Examples 1 to 4 are shown in Table 3.

(Table 3)

| | Preparatio n Example Nos. | Amount (%) of precursor | Raw compound of A (eq) | Raw material of a (eq) | Raw material of b (eq) |
|---|---|---|---|---|---|
| Example 1 | 1 | 30% | F1 (1 eq) | EG (1.2 eq) | - |
| Example 2 | 2 | 30% | F1 (1 eq) | EG (1.5 eq) | - |
| Example 3 | 3 | 30% | F2 (1 eq) | EG (1.2 eq) | - |
| Example 4 | 4 | 30% | F2 (1 eq) | EG (1.5 eq) | - |
| Example 5 | 5 | 30% | F1 (1 eq) | EG (1.2 eq) | HDO (0.3 eq) |
| Example 6 | 6 | 30% | F1 (1 eq) | EG (1.5 eq) | HDO (0.3 eq) |
| Example 7 | 7 | 30% | F2 (1 eq) | EG (1.2 eq) | HDO (0.3 eq) |
| Example 8 | 8 | 30% | F2 (1 eq) | EG (1.5 eq) | HDO (0.3 eq) |
| Comparative Example 1 | - | - | F1 (1eq) | EG (1.2eq) | - |
| Comparative Example 2 | - | - | F2 (1eq) | EG (1.2eq) | - |
| Comparative Example 3 | - | - | F1 (1eq) | EG (1.2eq) | HDO (0.3 eq) |
| Comparative Example 4 | - | - | F2 (1eq) | EG (1.2eq) | HDO (0.3 eq) |

[Evaluation of Properties]

The polyester polymer according to Examples 1 to 8 and Comparative Examples 1 to 4 were evaluated as follows.

Color (L/a/b): A L/a/b value was measured by using a Chip colorimeter manufactured by Nippon Denshoku Industries Co., Ltd. (sa-4000).

Intrinsic Viscosity: 0.5 g of a sample was dissolved in 10 ml of phenol : tetrachloroethane mixed in a ratio of 1:1 and

then, measured with respect to IV at 25 °C and 35 °C, respectively by using an Oswald viscometer.
Glass Transition Temperature (Tg): DSC made by TA Instrument was used under conditions of $N_2$, 20 psi, and 20 °C/min from room temperature to 300 °C.

The results are shown in Tables 4 to 5.

Properties Evaluation Results of Polyester Polymer

Table 4 shows intrinsic viscosity (dl/g, 25 °C), a color (L/a/b), and a glass transition temperature (Tg).

(Table 4)

| | IV (dl/g) | L value | a value | b value | Tg |
|---|---|---|---|---|---|
| Example 1 | 0.74 | 55.1 | -0.7 | 13.1 | 87.8 |
| Example 2 | 0.70 | 55.0 | -0.4 | 13.4 | 86.5 |
| Example 3 | 0.70 | 49.1 | -0.1 | 12.9 | 86.7 |
| Example 4 | 0.68 | 48.9 | -0.2 | 13.1 | 86.4 |
| Example 5 | 0.69 | 54.9 | -0.6 | 11.2 | 86.7 |
| Example 6 | 0.67 | 54.8 | -0.2 | 11.7 | 86.7 |
| Example 7 | 0.69 | 48.9 | -0.2 | 12.8 | 87.4 |
| Example 8 | 0.66 | 48.8 | -0.1 | 13.0 | 86.5 |
| Comparative Example 1 | 0.51 | 53.1 | 0.4 | 15.1 | 83.1 |
| Comparative Example 2 | 0.54 | 47.6 | 0.5 | 15.2 | 83.2 |
| Comparative Example 3 | 0.55 | 53.9 | 0.7 | 16.2 | 83.9 |
| Comparative Example 4 | 0.54 | 47.5 | 0.7 | 15.4 | 83.2 |

Referring to the results of Table 4, the polyester polymers of Examples 1 to 8 included the B or C specimen of Preparation Examples 1 to 8 and thus improved heat discoloration as well as sufficiently increased a molecular weight and turned out to have properties suitable for chip processing.

Table 5 shows intrinsic viscosity measured at 25 °C and 35 °C, respectively, a difference of the intrinsic viscosities (ΔIV), and a glass transition temperature. In addition, values calculated according to Equations 1 and 2 are shown.

[Equation 1]

$$\frac{\Delta IV}{b\ Value} \times 100$$

[Equation 2]

$$\frac{\Delta IV}{b\ value} \times Tg$$

(Table 5)

| | IV (25 °C) | IV (35 °C) | Tg (°C) | ΔIV | Equation1 calculation value | Equations calculation value |
|---|---|---|---|---|---|---|
| Example 1 | 0.74 | 0.531 | 87.8 | 0.209 | 1.60 | 1.40 |

(continued)

| | IV (25 °C) | IV (35 °C) | Tg (°C) | ΔIV | Equation1 calculation value | Equations calculation value |
|---|---|---|---|---|---|---|
| Example 2 | 0.70 | 0.528 | 86.5 | 0.172 | 1.28 | 1.11 |
| Example 3 | 0.70 | 0.529 | 86.7 | 0.171 | 1.33 | 1.15 |
| Example 4 | 0.68 | 0.519 | 84.4 | 0.161 | 1.23 | 1.04 |
| Example 5 | 0.69 | 0.521 | 86.7 | 0.169 | 1.51 | 1.31 |
| Example 6 | 0.67 | 0.515 | 86.7 | 0.155 | 1.32 | 1.15 |
| Example 7 | 0.69 | 0.523 | 87.4 | 0.167 | 1.30 | 1.14 |
| Example 8 | 0.66 | 0.51 | 86.5 | 0.15 | 1.15 | 1.00 |
| Comparative Example 1 | 0.51 | 0.441 | 83.1 | 0.069 | 0.46 | 0.38 |
| Comparative Example 2 | 0.54 | 0.468 | 83.2 | 0.072 | 0.47 | 0.39 |
| Comparative Example 3 | 0.55 | 0.471 | 83.9 | 0.079 | 0.49 | 0.41 |
| Comparative Example 4 | 0.54 | 0.469 | 83.2 | 0.071 | 0.46 | 0.38 |

Referring to the results of Table 5, the polyester polymers according to the examples of the present invention were calculated with respect to correlation calculation value (Equation 1) of an intrinsic viscosity difference (ΔIV) between intrinsic viscosity at 25 °C under a normal pressure and intrinsic viscosity at 35 °C under a normal pressure with color purity (b value) into greater than or equal to 0.5 (ΔIV to b), which was higher than those of the comparative examples. In general, as a polyester obtained through a condensation polymerization process has a higher molecular weight, color purity (b value) due to heat discoloration tends to be higher, but the examples had higher ΔIV than the comparative examples but low color purity (b value), which shows that the trade-off relationship was resolved, obtaining a polymer having a large molecular weight without heat discoloration.

On the contrary, since the polyester polymers according to the comparative examples were measured with respect to correlation calculation value (Equation 1) between an intrinsic viscosity difference (ΔIV) of intrinsic viscosity at 25 °C and intrinsic viscosity at 35 °C with color purity (b value) into less than 0.5, in general, as the polyester obtained through the condensation polymerization process had a high molecular weight, the color value (b value) also was increased.

In addition, referring to the results of Table 5, as the polyester polymer according to an example embodiment of the present invention was calculated with respect to a correlation calculation value (Equation 2) of an intrinsic viscosity difference (ΔIV) between intrinsic viscosity at 25 °C and intrinsic viscosity at 35 °C under a normal pressure with color purity (b value) and a glass transition temperature into greater than or equal to 0.5 (ΔIV to b, Tg), which was higher than those of the comparative examples. The reason is that in general, as the polyester has a higher molecular weight (ΔIV) through a condensation polymerization process, the color purity (b value) due to heat discoloration tends to be higher, but the examples, despite higher ΔIV than those of the comparative examples, obtained polyester having low color purity (b value), resolving the trade-off relationship.

On the contrary, the polyester polymers of the comparative examples were calculated with respect to a correlation calculation value (Equation 1) of an intrinsic viscosity difference (ΔIV) between intrinsic viscosity at 25 °C under a normal pressure and intrinsic viscosity at 35 °C under a normal pressure with color purity (b value) into less than 0.5 ( ΔIV to b, Tg), which shows that in general, as polyester obtained through a condensation polymerization process had a higher molecular weight, color purity (b value) was also increased.

The features, structures, effects, etc. illustrated in each of the aforementioned embodiments can be combined or modified with respect to other embodiments by those skilled in the art in the field to which the embodiments belong. Therefore, contents related to these combinations and variations should be construed as being included in the scope of the present invention.

**[Industrial Applicability]**

The present invention is to shorten synthesis time required until a polymer has a molecular weight of a certain level or higher and thus minimize time that the polymer is exposed to a high temperature by. Accordingly, the present invention provides a polyester polymer with minimized heat discoloration.

## Claims

**1.** A polyester polymer comprising

a repeating unit represented by Chemical Formula 1,
wherein an intrinsic viscosity is greater than or equal to 0.45 dL/g, and a b value is less than or equal to 13.5 in a Lab color difference system:

[Chemical Formula 1]

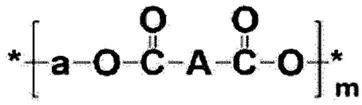

wherein, in Chemical Formula 1, A is a furan-based unit, a is a substituted or unsubstituted alkylene having 2 to 20 carbon atoms or a substituted or unsubstituted cycloalkylene having 5 to 20 carbon atoms, and
m is an integer of greater than or equal to 1.

**2.** The polyester polymer of claim 1, wherein

the value of Equation 1 is greater than or equal to 0.5:

[Equation 1]

$$\frac{\Delta IV}{b\ Value} \times 100$$

wherein, in Equation 1, IV is a difference between intrinsic viscosity values measured at 35 °C and 25 °C, respectively and the b value is a b value on the Lab color difference system.

**3.** The polyester polymer of claim 2, wherein

a repeating unit represented by Chemical Formula 2 is further included:

[Chemical Formula 2]

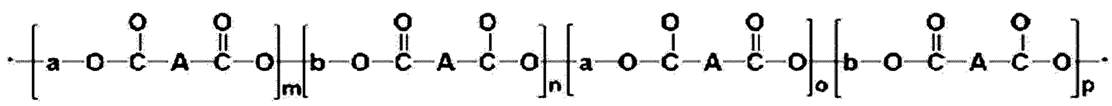

wherein, in Chemical Formula 2, A is a furan-based unit, the a is a substituted or unsubstituted alkylene having 2 to 20 carbon atoms, or a substituted or unsubstituted cycloalkylene having 5 to 20 carbon atoms, and the b is a substituted or unsubstituted alkylene having 2 to 20 carbon atoms, or substituted or unsubstituted heteroalkylene having 3 to 20 carbon atoms, or substituted or unsubstituted cycloalkylene having 5 to 20 carbon atoms, or substituted or unsubstituted cycloalkylene having 6 to 20 carbon atoms to 20 arylene,
the m, n, o, and p are integers greater than or equal to 0, and $m+n+o+p \geq 2$.

**4.** The polyester polymer of claim 3, wherein the n value is greater than the m value.

**5.** The polyester polymer of claim 3, wherein A each independently includes a structure represented by Chemical Formula 3:

[Chemical Formula 3]

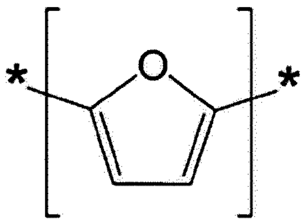

.

**6.** The polyester polymer of claim 3, wherein the a of the copolymers of Chemical Formula 1 and Chemical Formula 2 is selected from units derived from compounds represented by Chemical Formula 6a and Chemical Formula 6c:

[Chemical Formula 6a]

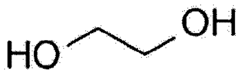

[Chemical Formula 6b]

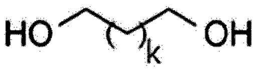

k = 2-20

[Chemical Formula 6c]

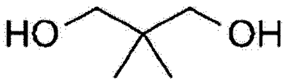

.

**7.** The polyester polymer of claim 3, wherein the b of the copolymer of Chemical Formula 2 is selected from units derived from compounds represented by Chemical Formula 6b and Chemical Formula 6u:

[Chemical Formula 6b]

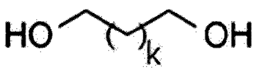

k = 2-20

[Chemical Formula 6c]

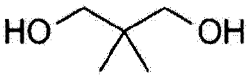

[Chemical Formula 6d]

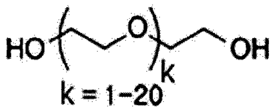

[Chemical Formula 6e]

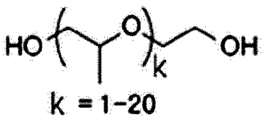

[Chemical Formula 6f]

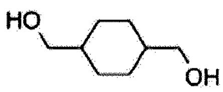

[Chemical Formula 6g]

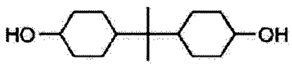

[Chemical Formula 6h]

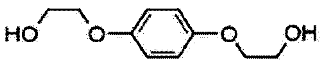

[Chemical Formula 6i]

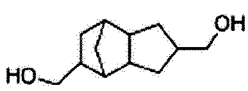

[Chemical Formula 6j]

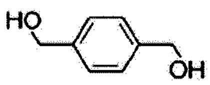

[Chemical Formula 6k]

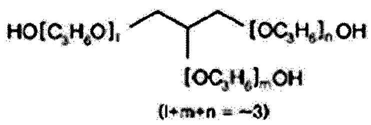

[Chemical Formula 6l]

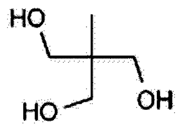

[Chemical Formula 6m]

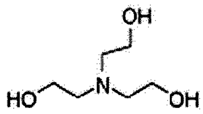

[Chemical Formula 6n]

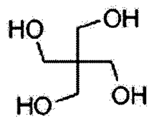

[Chemical Formula 6o]

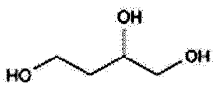

[Chemical Formula 6p]

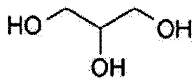

[Chemical Formula 6q]

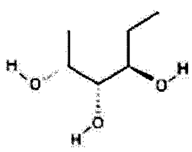

[Chemical Formula 6r]

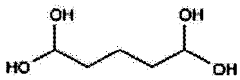

[Chemical Formula 6s]

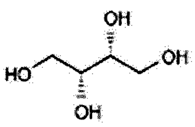

[Chemical Formula 6t]

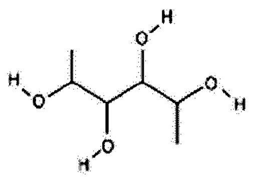

[Chemical Formula 6u]

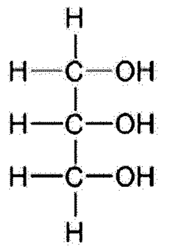

**8.** The polyester polymer of claim 3, wherein

the value of Equation 2 satisfies a value of greater than or equal to 0.5:

[Equation 2]

$$\frac{\Delta IV}{b\ value} \times Tg$$

wherein, in Equation 2, ΔIV is a difference between intrinsic viscosity values measured at 35 °C and 25 °C, respectively, the b value is a b value in the Lab color difference system, and Tg is a glass transition temperature.

**INTERNATIONAL SEARCH REPORT**

International application No.
**PCT/KR2021/011741**

**A. CLASSIFICATION OF SUBJECT MATTER**

**C08G 63/668**(2006.01)i

According to International Patent Classification (IPC) or to both national classification and IPC

**B. FIELDS SEARCHED**

Minimum documentation searched (classification system followed by classification symbols)

C08G 63/668(2006.01); B29C 49/00(2006.01); C08G 63/672(2006.01); C08G 63/78(2006.01); C08G 63/84(2006.01); C08G 73/10(2006.01); C08J 5/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 폴리에스테르(polyester), 퓨란(furan), 에틸렌글리콜(ethylene glycol), 변색(discoloration)

**C. DOCUMENTS CONSIDERED TO BE RELEVANT**

| Category* | Citation of document, with indication, where appropriate, of the relevant passages | Relevant to claim No. |
|---|---|---|
| Y | CN 108659209 A (ZHEJIANG UNIVERSITY) 16 October 2018 (2018-10-16)<br>See claims 1 and 3; paragraphs [0057]-[0059]; and example 1. | 1-8 |
| Y | KR 10-2017-0071812 A (LG CHEM, LTD.) 26 June 2017 (2017-06-26)<br>See abstract; claims 1 and 11; and paragraphs [0007] and [0023]. | 1-8 |
| A | CN 108503809 A (CHANGCHUN INST. OF APPLIED CHEMISTRY, CHINESE ACADEMY OF SCIENCES) 07 September 2018 (2018-09-07)<br>See claims 1-10. | 1-8 |
| A | XIE, H. et al. Biobased poly(ethylene-co-hexamethylene 2,5-furandicarboxylate)(PEHF) copolyesters with superior tensile properties. Industrial & engineering chemistry research. 2018, vol. 57, no. 39, inner pp. 1-21.<br>See entire document. | 1-8 |
| A | CN 111269405 A (ZHEJIANG HENGLAN TECHNOLOGY CO., LTD.) 12 June 2020 (2020-06-12)<br>See entire document. | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2021** | **23 December 2021** |


| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |


Form PCT/ISA/210 (second sheet) (July 2019)

**INTERNATIONAL SEARCH REPORT**

International application No.
**PCT/KR2021/011741**

**C. DOCUMENTS CONSIDERED TO BE RELEVANT**

| Category* | Citation of document, with indication, where appropriate, of the relevant passages | Relevant to claim No. |
|---|---|---|
| A | US 2016-0002397 A1 (SULZER CHEMTECH AG) 07 January 2016 (2016-01-07)<br>See entire document. | 1-8 |

Form PCT/ISA/210 (second sheet) (July 2019)

**INTERNATIONAL SEARCH REPORT**
**Information on patent family members**

International application No.
**PCT/KR2021/011741**

| Patent document cited in search report | | | Publication date (day/month/year) | Patent family member(s) | | | Publication date (day/month/year) |
|---|---|---|---|---|---|---|---|
| CN | 108659209 | A | 16 October 2018 | None | | | |
| KR | 10-2017-0071812 | A | 26 June 2017 | KR | 10-2020091 | B1 | 18 October 2019 |
| CN | 108503809 | A | 07 September 2018 | CN | 108503809 | B | 03 September 2021 |
| | | | | CN | 108623794 | A | 09 October 2018 |
| | | | | CN | 108623794 | B | 03 September 2021 |
| | | | | CN | 108774314 | A | 09 November 2018 |
| | | | | CN | 108774314 | B | 23 February 2021 |
| | | | | WO | 2019-214575 | A1 | 14 November 2019 |
| CN | 111269405 | A | 12 June 2020 | None | | | |
| US | 2016-0002397 | A1 | 07 January 2016 | BR | 112015018961 | A2 | 18 July 2017 |
| | | | | CN | 105229052 | A | 06 January 2016 |
| | | | | CN | 105229052 | B | 31 May 2017 |
| | | | | EP | 2928942 | A1 | 14 October 2015 |
| | | | | EP | 2928942 | B1 | 29 March 2017 |
| | | | | ES | 2628347 | T3 | 02 August 2017 |
| | | | | JP | 2016-510084 | A | 04 April 2016 |
| | | | | JP | 2018-172689 | A | 08 November 2018 |
| | | | | JP | 6416134 | B2 | 31 October 2018 |
| | | | | KR | 10-2015-0132115 | A | 25 November 2015 |
| | | | | KR | 10-2149260 | B1 | 07 September 2020 |
| | | | | PL | 2928942 | T3 | 31 August 2017 |
| | | | | RU | 2015136801 | A | 21 April 2017 |
| | | | | RU | 2670758 | C2 | 25 October 2018 |
| | | | | RU | 2670758 | C9 | 17 December 2018 |
| | | | | TW | 201446831 | A | 16 December 2014 |
| | | | | TW | I619741 | B | 01 April 2018 |
| | | | | US | 10377853 | B2 | 13 August 2019 |
| | | | | US | 2017-0267812 | A1 | 21 September 2017 |
| | | | | WO | 2014-139602 | A1 | 18 September 2014 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103483571